# EUROPEAN PATENT APPLICATION

(11) **EP 4 397 417 A1**
(43) Date of publication of application: **10.07.2024**
(21) Application number: 22943371.9
(22) Date of filing: 21.07.2022
(51) Int. Cl.: B05C 11/10, H01M 10/04, H01M 6/00

(54) **FEEDING DEVICE AND GLUING SYSTEM**

(30) Priority: 25.05.2022 CN 202221259144 U
(71) Applicant: Contemporary Amperex Technology Co., Limited, Ningde, Fujian 352100 (CN)
(72) Inventor: YU, Liang, Ningde, Fujian 352100 (CN)
(74) Representative: Rowlands, Stuart Michael
(86) International application number: PCT/CN2022/106912
(87) International publication number: WO 2023/226180

(57) **Abstract**

Provided in the present invention are a feeding device and a gluing system. The feeding device comprises a material barrel, a piston, and an elastic part, wherein the material barrel is provided with an opening; the piston fits with an inner wall of the material barrel via the opening, the piston and the material barrel enclose an accommodating cavity for containing a material, and the piston is configured to move along the inner wall of the material barrel; and the elastic part is arranged between the inner wall of the material barrel and the piston, and is used for connecting the piston to the material barrel in a sealing manner. According to the feeding device provided in the embodiments of the present invention, the sealing effect on the accommodating cavity can be kept, so that the working reliability of the feeding device is effectively improved.

## Description

### CROSS REFERENCES TO RELATED APPLICATIONS

The present application claims priority of the Chinese patent application No. 202221259144.5, titled "Material Feeding Device and Glue Applying System" and filed on May 25, 2022, the entire content of which is incorporated by reference herein.

### TECHNICAL FIELD

The present application relates to the technical field of battery production, and particularly to a material feeding device and a glue applying system.

### BACKGROUND

Batteries are widely applied in electronic devices, for example, mobile phones, laptops, battery cars, electric cars, electric planes, electric boats, electric toy cars, electric toy boats, electric toy planes and electric tools, etc.

In the development of battery technology, how to improve the performance of the batteries is a continuous improvement issue in the field of batteries. In production of the batteries, it is necessary to seal casings of the batteries by using material feeding devices such as glue applying mechanisms. However, during operation of the material feeding devices, sometimes the material feeding devices do not run smoothly. Therefore, how to improve the operating reliability of the material feeding devices is an urgent problem to be solved.

### SUMMARY

The embodiments of the present application provide a material feeding device and a glue applying system which can improve operating reliability of the material feeding device.

On a first aspect, the embodiments of the present disclosure provide a material feeding device, which includes a material barrel, a piston and an elastic member; the material barrel includes an opening; the piston matches with an inner wall of the material barrel through the opening, the piston encloses and forms a containing cavity for accommodating materials with the material barrel, and the piston is configured to be able to move along the inner wall of the material barrel; and the elastic member is disposed between the inner wall of the material barrel and the piston, and adapted to connect the piston and the material barrel in a sealing manner.

In the material feeding device provided in the embodiments of the present application, by providing the elastic member and disposing it between the inner wall of the material barrel and the piston. The elastic member can continue to maintain an abutting state against the piston and the inner wall of the material barrel by restoring part of deformation in case of being worn to a certain degree, so as to maintain the sealing effect on the containing cavity. This can effectively improve the operating reliability of the material feeding device.

In some embodiments, the piston includes a groove on a side facing the inner wall of the material barrel, and the elastic member is at least partially accommodated in the groove. With such configuration, a risk of the elastic member being separated from the piston when the elastic member moves relative to the inner wall of the material barrel, can be reduced.

In some embodiments, the elastic member includes a pressure chamber for accommodating fluid, the pressure chamber is formed in an annular shape and disposed around an entire circumference of the piston, and the pressure chamber is at least partially disposed between the piston and the material barrel.

In some embodiments, the piston includes a piston body and a pressing block arranged in an axial direction of the material barrel; the elastic member includes an elastic body and a clamping portion, the pressure chamber is formed in the elastic body, the clamping portion is disposed on a side of the elastic body facing away from the material barrel, and the clamping portion is disposed and clamped between the piston body and the pressing block. As such, by inputting fluid into the pressure chamber or discharging the fluid from the pressure chamber, the pressure in the pressure chamber can be changed, so that a suitable pressing force is generated between the elastic member, and the piston and the inner wall of the material barrel, and meanwhile a suitable friction force between the elastic member and the inner wall of the material barrel is generated while ensuring the sealing performance of the containing cavity.

In some embodiments, the piston body includes a first recess portion on a side facing the pressing block, the pressing block includes a second recess portion on a side facing the first recess portion, and the clamping portion is disposed and clamped between the first recess portion and the second recess portion. It is beneficial to reduce a gap between the pressing block and the piston body, improve fitting of the pressing block with the piston body, and further improve the sealing performance of the containing cavity. With such configuration, a contact area between the elastic member and the piston can be increased, thereby increasing a friction force between the elastic member and the piston, and reducing a risk of the elastic member rotating relative to the piston in a circumferential direction.

In some embodiments, the material feeding device further includes a pressure measuring element, and the pressure measuring element is communicated with the pressure chamber and adapted to measure a pressure within the pressure chamber. As such, it is convenient to fill the pressure chamber with fluid in a timely manner, or to discharge the fluid in the pressure chamber in a timely manner, so as to ensure the sealing performance of the containing cavity.

In some embodiments, the material feeding device further includes a fluid source and a flow passage, the fluid source is adapted to provide fluid to the pressure chamber, and the flow passage is adapted to communicate the pressure chamber with the fluid source. With such configuration, it is more convenient to fill the fluid into the pressure chamber.

In some embodiments, the material feeding device further includes a pressure regulating element, and the pressure regulating element is connected to the flow passage and adapted to regulate the pressure in the pressure chamber. As such, it facilitates to regulate the pressure inside the pressure chamber in real time.

In some embodiments, the piston includes a material discharging pipe, the material discharging pipe is communicated with the containing cavity and adapted for the materials in the containing cavity to flow out. With such configuration, it facilitates to control a speed at which the materials flow out through the material outlet.

In some embodiments, the material feeding device further includes a pumping unit, and the pumping unit is communicated with the material discharging pipe and adapted to pump out the materials in the containing cavity through the material discharging pipe. As such, it facilitates the materials to flow out from the containing cavity more smoothly.

On a second aspect, the embodiments of the present application provide a glue applying system, which includes the material feeding device according to any of the above embodiments and a metering system; the material feeding device is adapted to supply fluid glue; the metering system is communicated with the material feeding device and adapted to measure a volume of the fluid glue to be applied.

The glue applying system provided by the embodiments of the present application adopts the material feeding device of any of the above embodiments, and thus has the same technical effects, which will not be repeated here.

In some embodiments, the glue applying system further includes a transfer device, the transfer device includes a buffer barrel and a vacuumizing device, and the buffer barrel is adapted to communicate the material feeding device with the metering system and adapted for the fluid glue to flow into the metering system through it, and the vacuumizing device is communicated with the buffer barrel and adapted to extract gas in the buffer barrel. With such configuration, it facilitates to discharge the gas such as air mixed into the fluid glue, thereby being conducive to improve an accuracy of the subsequent metering system in measuring the volume of the fluid glue.

### BRIEF DESCRIPTION OF THE DRAWINGS

In order to describe the technical solution of the embodiments of the present application more clearly, a brief introduction will be given to the accompanying drawings required in the embodiments of the present application. It will be apparent that the accompanying drawings described below are merely some embodiments of the present application, and for ordinary skilled person in the art, other accompanying drawings can be obtained based on these accompanying drawings without any creative effort.
Fig. 1 is a structural schematic diagram of a material feeding device provided by embodiments of the present application;
Fig. 2 is a sectional schematic diagram of a material feeding device provided by embodiments of the present application;
Fig. 3 is a structural schematic diagram of another material feeding device provided by embodiments of the present application;
Fig. 4 is a structural schematic diagram of a glue applying system provided by embodiments of the present application;
Fig. 5 is a structural schematic diagram of another glue applying system provided by embodiments of the present application.

In the accompanying drawings, figures may not be drawn to an actual scale.

### In the accompanying drawings

1, material feeding device; 1a, containing cavity; 11, material barrel; 11a, opening; 12, piston; 12a, groove; 121, piston body; 121a, first recess portion; 122, pressing block; 122a, second recess portion; 123, material discharging pipe; 14, elastic member; 14a, pressure chamber; 141, elastic body; 142, clamping portion; 15, pressure measuring element; 16, pressure regulating element.
2, metering system.
3, transfer device; 31, buffer barrel; 32, vacuumizing device.

### DETAILED DESCRIPTION

The embodiments of the present application will be further described in detail below in combination with the accompanying drawings and embodiments. The following detailed description of the embodiments and accompanying drawings are intended to exemplarily illustrate the principles of the present application, but cannot be intended to limit the scope of the present application, that is, the present application is not limited to the described embodiments.

In the description of the present application, it should be noted that unless otherwise specified, "a plurality of" means two or more; the orientation or positional relationship indicated by the terms "up", "down", "left", "right", "inside", "outside", or the like is merely for the convenience of describing the present application and simplifying the description, rather than indicating or implying that the device or component referred to must have a specific orientation, be constructed and operated in a specific orientation, and therefore cannot be understood as a limitation on the present application. In addition, the terms "first", "second", etc. are merely used for purpose of description and cannot be understood as indicating or implying relative importance. The term "vertical" does not mean that it is strictly vertical, but allows an error in a certain range. The term "parallel" does not mean it is strictly parallel, but allows an error in a certain range.

When referring to "embodiment" in the present application, it means that specific features, structures, or characteristics described in combination with the embodiment can be included in at least one embodiment of the present application. The phrase appearing in various positions in the specification does not necessarily refer to the same embodiment, nor is it an independent or alternative embodiment that is mutually exclusive with other embodiments. The skilled person in the field can explicitly and implicitly understand that the embodiment described in the present application can be combined with other embodiments.

In the description of the present application, it should also be noted that unless otherwise specified and limited, the terms "installation", "connection", and "coupling" should be understood broadly, for example, they can be fixed connections, detachable connections, or integrated connections; they can be direct connections or indirect connections through intermediate media. For ordinary skilled person in the field, the specific meanings of the above terms in the present application can be understood according to specific circumstances.

A material feeding device can be adapted to supply flowable materials such as slurry and fluid glue. Taking that the material feeding device supplies the fluid glue as an example, the material feeding device squeezes the fluid glue out of a glue barrel by changing a pressure in a containing cavity inside the barrel, to seal a casing of a battery, and the like.

After finding the problem that the material feeding device cannot squeeze out of materials during operation, the inventor of the present application has conducted a systematic analysis and research on the structure and working process of the material feeding device, and results show that: a piston of the material feeding device and a material barrel are generally connected in a sealing manner through a sealing ring, which moves relative to an inner wall of the material barrel along with the piston; as increase of the working time of the material feeding device and thus increase of the time of friction between the sealing ring and the inner wall of the material barrel, the sealing ring may be damaged due to wear, aging, and other reasons, resulting in that it cannot seal the material barrel, causing material leakage in the material barrel, which seriously affects operating reliability of the material feeding device.

Based on the above issues found by the inventor, the inventor has improved the structure of the material feeding device, and the technical solutions described in the embodiments of the present application are applicable to the material feeding device and a glue applying system including the material feeding device.

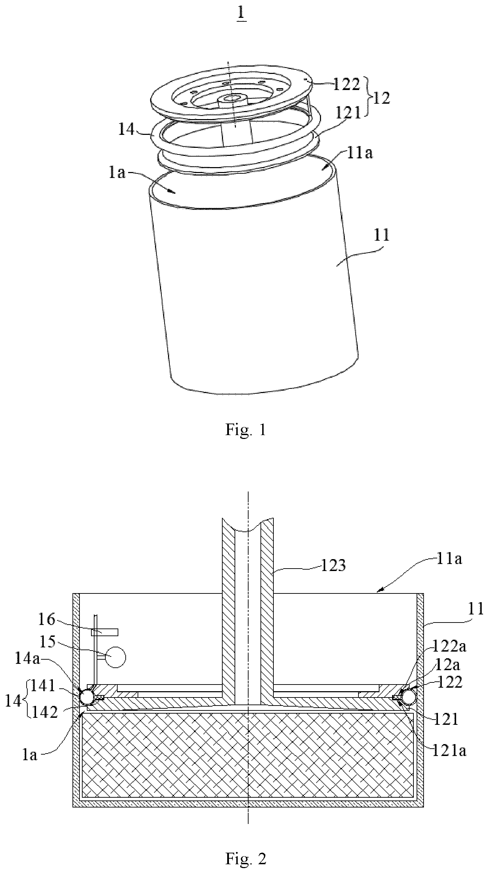

Figs. 1 to 3 respectively show structural schematic diagrams of the material feeding devices provided in different embodiments of the present application.

As shown in Fig. 1, the material feeding device 1 provided by the embodiments of the present application includes a material barrel 11, a piston 12, and an elastic member 14. The material barrel 11 includes an opening 11a, and the piston 12 matches with an inner wall of the material barrel 11 through the opening 11a; the piston 12 encloses and forms a containing cavity 1a for accommodating materials with the material barrel 11, and the piston 12 is configured to be able to move along the inner wall of the material barrel 11. The elastic member 14 is disposed between the inner wall of the material barrel 11 and the piston 12, and is adapted to connect the piston 12 and the material barrel 11 in a sealing manner.

Optionally, the materials contained in the material barrel 11 can be fluid glue or slurry, and the slurry can be positive or negative electrode slurry in the battery.

The piston 12 matches with the inner wall of the material barrel 11 through the elastic member 14 to seal the containing cavity 1a. During the movement of the piston 12 relative to the inner wall of the material barrel 11, a volume of the containing cavity 1a can be reduced, and the materials can flow out under the action of internal gas pressure, or, a negative pressure device can be installed outside the containing cavity 1a, and the materials can flow out under the action of the negative pressure device.

The elastic member 14 is disposed between the inner wall of the material barrel 11 and the piston 12, and can generate certain compression deformation to abut against the inner wall of the material barrel 11 and the piston 12 between them. Subsequently, the elastic member 14 moves along with the piston 12 relative to the inner wall of the material barrel 11, and is subjected to certain wear or deformation. In this case, the elastic member 14 can compensate for its own wear or deformation by restoring part of the deformation, so that it can continue to abut against the inner wall of the material barrel 11 and the piston 12 between them and maintain its sealing effect on the components being sealed.

Optionally, the elastic member 14 may be made of rubber, silicone, or the like. The elastic member 14 can be formed as a solid structure or a hollow structure, as long as it has a certain degree of elasticity.

Optionally, the elastic member 14 may be disposed around an entire circumferential side of the piston 12, or the elastic member 14 may be disposed around a portion of the circumferential side of the piston 12.

Optionally, the material feeding device 1 can be provided with a material outlet for the materials to flow out of the containing cavity 1a. The material outlet may be disposed on the piston 12 or a barrel wall of the material barrel 11. For example, the material outlet may be disposed on a bottom wall of the material barrel 11 opposite the piston 12. The specific position of the material outlet can be selected according to specific requirements, and there are no restrictions here.

The material feeding device 1 provided in the embodiments of the present application is provided with the elastic member 14, which is disposed between the inner wall of the material barrel 11 and the piston 12, and thus in the case that certain wear occurs to the elastic member 14, the elastic member 14 can continue to abut against the piston 12 and the inner wall of the material barrel 11 by restoring part of its deformation so as to maintain the sealing effect on the containing cavity 1a, thereby enabling the material feeding device 1 to operate normally, and effectively improving the operating reliability of the material feeding device 1.

As shown in Fig. 2, in some embodiments, the piston 12 includes a groove 12a on a side facing the inner wall of the material barrel 11, and the elastic member 14 is at least partially accommodated in the groove 12a.

Optionally, the groove 12a may be disposed around the entire circumferential side of the piston 12 or disposed at intervals around the circumferential side of the piston 12.

By providing the groove 12a on the side of the piston 12 facing the inner wall of the material barrel 11, and disposing the elastic member 14 in the groove 12a, the piston 12 can provide a restraining force in a moving direction on the elastic member 14 during the movement of the elastic member 14 along with the piston 12 relative to the inner wall of the material barrel 11, thereby reducing a risk of the elastic member 14 being separated from the piston 12 during the movement thereof relative to the inner wall of the material barrel 11.

In some embodiments, the elastic member 14 includes a pressure chamber 14a for containing fluid, the pressure chamber 14a is formed in an annular shape and disposed around an entire circumference of the piston 12, and at least part of the pressure chamber 14a is disposed between the piston 12 and the material barrel 11.

Optionally, the fluid contained in the pressure chamber 14a can be liquid, gas, or the like, and by changing a volume of the fluid in the pressure chamber 14a, a pressure inside the pressure chamber 14a can be changed, thereby changing a pressing force of the elastic member 14 against the piston 12 and the inner wall of the material barrel 11.

Specifically, with the wear and deformation of the elastic member 14, the pressing force of the elastic member 14 against the material barrel 11 and the piston 12 decreases, and the sealing performance on the containing cavity 1a decreases. By injecting an appropriate amount of fluid into the pressure chamber 14a, the pressure inside the pressure chamber 14a can be ensured, so as to ensure the pressing force of the elastic member 14 against the material barrel 11 and the piston 12.

It can be understood that the pressure inside the pressure chamber 14a increases with increase of the volume of internal fluid. The volume of fluid inside the pressure chamber 14a can be specifically set according to the pressure requirements inside the pressure chamber 14a, so as to minimize a friction force between the elastic member 14 and the inner wall of the material barrel 11 while ensuring the sealing performance of the elastic member 14 on the piston 12 and the inner wall of the material barrel 11.

Therefore, by providing the elastic member 14 with the pressure chamber 14a, the pressure inside the pressure chamber 14a can be changed by inputting fluid into the pressure chamber 14a or discharging fluid from the pressure chamber 14a, so that a suitable pressing force is generated between the elastic member 14, and the piston 12 and the inner wall of the material barrel 11, and also that a suitable friction force is generated between the elastic member 14 and the inner wall of the material barrel 11 while ensuring the sealing performance of the containing cavity 1a. It can be understood that the greater the pressing force between the elastic member 14 and the material barrel 11, the greater the friction force between the two during their relative movement. By providing a suitable pressing force between the elastic member 14 and the inner wall of the material barrel 11, a risk of the piston 12 running non-smoothly relative to the inner wall of the material barrel 11 due to excessive friction force between the elastic member 14 and the material barrel 11 is reduced, and also a possibility of sealing failure of the containing cavity 1a due to the too small pressing force between the piston 12 and the inner wall of the material barrel 11.

Optionally, the piston 12 can be integrally formed, or can be formed by connecting a plurality of components, which can be selected according to actual requirements.

In some embodiments, the piston 12 includes a piston body 121 and a pressing block 122 arranged in an axial direction of the material barrel 11. The elastic member 14 includes an elastic body 141 and a clamping portion 142, the pressure chamber 14a is formed in the elastic body 141, the clamping portion 142 is disposed on a side of the elastic body 141 facing away from the material barrel 11, and the clamping portion 142 is disposed and clamped between the piston body 121 and the pressing block 122.

In an embodiment where the piston 12 includes the groove 12a, the groove 12a can be all arranged on the piston body 121, or can be all arranged on the pressing block 122, or a part of the groove 12a is arranged on the piston body 121 while the other part is arranged on the pressing block 122.

Specifically, the clamping portion 142 is disposed between the piston body 121 and the pressing block 122, and by connecting the piston body 121 and the pressing block 122 through a connecting piece, a clamping force of the piston body 121 and the pressing block 122 on the clamping portion 142 is ensured.

It can be understood that by providing the clamping portion 142, and disposing and clamping it between the piston body 121 and the pressing block 122, a contact area between the elastic member 14 and the piston 12 can be increased, thereby increasing a friction force between the elastic member 14 and the piston 12, and reducing a risk of the elastic member 14 rotating relative to the piston 12 in a circumferential direction of the piston 12.

In some embodiments, the piston body 121 includes a first recess portion 121a on a side facing the pressing block 122, the pressing block 122 includes a second recess portion 122a on a side facing the first recess portion 121a, and the clamping portion 142 is disposed and clamped between the first recess portion 121a and the second recess portion 122a.

Specifically, the first recess portion 121a and the second recess portion 122a are disposed opposite each other, and the clamping portion 142 is disposed and clamped between the first recess portion 121a and the second recess portion 122a after the pressing block 122 and the piston body 121 being connected to each other. As such, it is beneficial for further increasing the contact area between the pressing block 122, the piston body 121, and the clamping portion 142, thereby improving the fixing effect on the clamping portion 142. Moreover, by disposing the clamping portion 142 within the first recess portion 121a and the second recess portion 122a, it is beneficial for reducing a gap between the pressing block 122 and the piston body 121, improving fitting of the pressing block 122 with the piston body 121, and further improving the sealing performance of the containing cavity 1a.

Optionally, the pressure inside the pressure chamber 14a can be measured at regular intervals through a pressure measuring device external to the material feeding device 1, or the pressure measuring device can be integrated into the material feeding device 1 to monitor the pressure inside the pressure chamber 14a in real time, which can be specifically arranged according to the requirements.

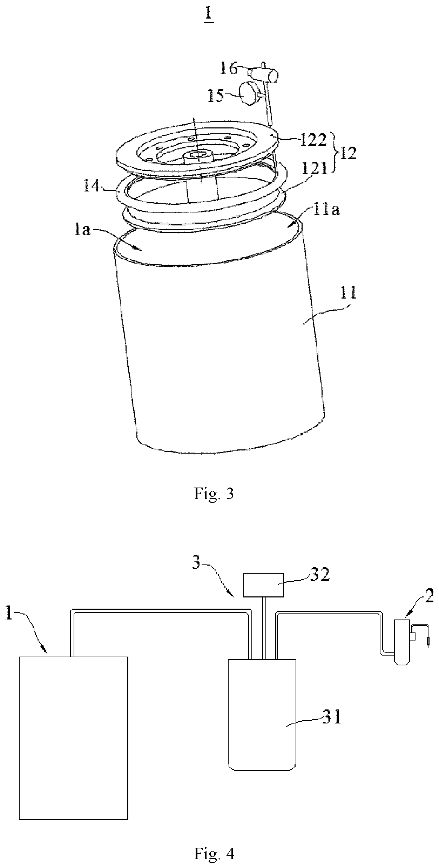

As shown in Figs. 2 and 3, in some embodiments, the material feeding device 1 further includes a pressure measuring element 15, which is communicated with the pressure chamber 14a and adapted to measure the pressure of the pressure chamber 14a.

Specifically, the pressure measuring element 15 may be an element such as a pressure gauge. By providing the pressure measuring element 15, the pressure inside the pressure chamber 14a can be monitored in real time, so as to timely fill the pressure chamber 14a with fluid or to timely discharge the fluid in the pressure chamber 14a when the pressure inside the pressure chamber 14a is outside a preset pressure range, and to ensure that the pressure inside the pressure chamber 14a keeps within the normal range, thereby ensuring the pressing force of the elastic member 14 against the piston 12 and the inner wall of the material barrel 11. As such, the sealing performance of the containing cavity 1a can be further improved.

Optionally, the fluid can be supplemented to the pressure chamber 14a through a related device external to the material feeding device 1, or the related device can be integrated into the material feeding device 1 to supplement the fluid to the pressure chamber 14a in real time.

In some embodiments, the material feeding device 1 further includes a fluid source and a flow passage, the fluid source is adapted to supply fluid to the pressure chamber 14a, and the flow passage is adapted to communicate the pressure chamber 14a with the fluid source.

Specifically, when the pressure inside the pressure chamber 14a is insufficient, the fluid source inputs fluid into the pressure chamber 14a through the flow passage so as to increase the pressure inside the pressure chamber 14a.

In the embodiment where the material feeding device 1 includes both the pressure measuring element 15 and the fluid source, the pressure measuring element 15 can be disposed on the flow passage, and the pressure inside the pressure chamber 14a can be monitored in real time through the pressure measuring element 15. When the pressure inside the pressure chamber 14a is detected to be insufficient by the pressure measuring element 15, the fluid source can be automatically opened to input fluid into the pressure chamber 14a.

Therefore, by providing the material feeding device 1 to include the fluid source and the flow passage, the convenience of supplementing fluid into the pressure chamber 14a can be improved.

In some embodiments, the material feeding device 1 further includes a pressure regulating element 16, which is connected to the flow passage and adapted to regulate the pressure in the pressure chamber 14a.

Specifically, the pressure regulating element 16 can be a pressure regulating valve. When the pressure inside the pressure chamber 14a is insufficient, the fluid is input into the pressure chamber 14a by opening the fluid source to increase the pressure inside the pressure chamber 14a, and when the pressure inside the pressure chamber 14a is too high, the pressure inside the pressure chamber 14a can be reduced by discharging the fluid inside the pressure chamber 14a.

Therefore, by providing the pressure regulating element 16, it is more convenient to adjust the pressure in the pressure chamber 14a in a timely and accurate manner, so that the elastic member 14 maintains a suitable pressing force against the material barrel 11 and the piston 12, thereby reducing the friction force between the elastic member 14 and the inner wall of the material barrel 11 while ensuring the sealing performance of the containing cavity 1a.

In some embodiments, the piston 12 includes a material discharging pipe 123, which is communicated with the containing cavity 1a and is adapted for the materials in the containing cavity 1a to flow out.

Specifically, during the movement of the piston 12 relative to the material barrel 11, the containing cavity 1a can be compressed, and the materials in the containing cavity 1a flows out through the material discharging pipe 123 under pressure, thereby facilitating subsequent use.

It can be understood that by providing the material outlet at the piston 12, it facilitates to control a speed at which the materials flow out through the material outlet during the movement of the piston 12.

Optionally, it is available that the materials flow out merely under the pressure caused by the volume change of the containing cavity 1a, or it is available that a negative pressure device is provided, and the materials flow out simultaneously under the action of the negative pressure device and the volume change of the containing cavity 1a.

In some embodiments, the material feeding device 1 further includes a pumping unit, which is communicated with the material discharging pipe 123 and adapted to discharge the materials in the containing cavity 1a through the material discharging pipe 123.

Optionally, the pumping unit can be disposed inside or outside the containing cavity 1a, which can be selected according to requirements. Exemplarily, the pumping unit includes a plunger pump disposed outside the containing cavity 1a and is communicated with the material discharging pipe 123.

It can be understood that by providing the pumping unit, it is beneficial for improving the convenience of outflow of the materials in the containing cavity 1a.

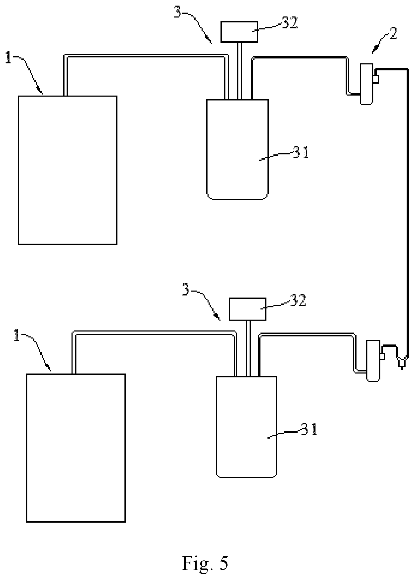

Figs. 4 and 5 respectively show the structural schematic diagrams of the glue applying system provided in different embodiments of the present application.

As shown in Figs. 4 and 5, the glue applying system according to the embodiments of the present application includes the material feeding device 1 provided in any of the above embodiments and a metering system 2. The material feeding device 1 is adapted to supply fluid glue, and the metering system 2 is communicated with the material feeding device 1 and adapted to measure a volume of the fluid glue to be applied.

Specifically, the glue applying system is adapted to extrude the fluid glue out of the material barrel 11, and the metering system 2 can include a component, such as a metering pump that can measure the volume of the fluid glue, to accurately measure the volume of the fluid glue to be applied, and thus accurately control the amount of applied fluid glue.

Optionally, the glue applying system can include one material feeding device 1, or include two or more material feeding devices 1, the two or more material feeding devices 1 can provide two or more different types of fluid glues, and the volumes of the two or more different types of fluid glues are measured by the metering system 2 so as to achieve a function of mixing different types of fluid glues in a certain proportion and then applying the fluid glues.

The glue applying system provided in the embodiments of the present application adopts the material feeding device 1 provided in any of the above embodiments. Therefore, after the elastic member 14 of the material feeding device 1 is worn or deformed, the pressing force of the elastic member 14 against the inner wall of the material barrel 11 and the piston 12 can be maintained through the deformation of the elastic member 14 itself, thereby ensuring the sealing performance of the containing cavity 1a and improving the operating reliability of the glue applying system.

In some embodiments, the glue applying system further includes a transfer device 3, which includes a buffer barrel 31 and a vacuumizing device 32. The buffer barrel 31 is adapted to communicate the material feeding device 1 with the metering system 2, and is adapted for the fluid glue to flow into the metering system 2 through it. The vacuumizing device 32 is communicated with the buffer barrel 31 and is adapted to extract gas in the buffer barrel 31.

It can be understood that in the embodiment where the glue applying system includes a plurality of material feeding devices 1, each material feeding device 1 is provided with a transfer device 3 to extract the gas such as air in each material feeding device 1.

It can be understood that when the piston 12 initially matches with the inner wall of the material barrel 11, air will inevitably be stored in the containing cavity 1a. By providing the transfer device 3 and communicating the buffer barrel 31 of the transfer device 3 with the material feeding device 1, the gas in the containing cavity 1a can be discharged into the buffer barrel 31 during the movement of the piston 12 relative to the material barrel 11, and since the buffer barrel 31 is communicated with the vacuumizing device 32, the air in the buffer barrel 31 can be discharged through the vacuumizing device 32.

Therefore, by providing the transfer device 3, it facilitates to discharge the air and other gases mixed in the fluid glue, which is beneficial for improving the accuracy of the subsequent metering system 2 in measuring the volume of the fluid glue.

Although the present application has been described with reference to preferred embodiments, various improvements can be made without departing from the scope of the present application and components can be replaced with equivalents. Especially, as long as there is no structural conflict, the various technical features mentioned in various embodiments can be combined in any manner. The present application is not limited to the specific embodiments disclosed in the article, but includes all technical solutions falling within the scope of the claims.

## Claims

1. A material feeding device, **characterized by** comprising:
a material barrel, comprising an opening;
a piston, matching with an inner wall of the material barrel through the opening, the piston enclosing and forming a containing cavity for accommodating materials with the material barrel, and the piston being configured to be able to move along the inner wall of the material barrel; and
an elastic member, disposed between the inner wall of the material barrel and the piston, and adapted to connect the piston and the material barrel in a sealing manner.

2. The material feeding device according to claim 1, **characterized in that** the piston comprises a groove on a side facing the inner wall of the material barrel, and the elastic member is at least partially accommodated in the groove.

3. The material feeding device according to claim 1 or 2, **characterized in that** the elastic member comprises a pressure chamber for accommodating fluid, the pressure chamber is formed in an annular shape and disposed around an entire circumference of the piston, and the pressure chamber is at least partially disposed between the piston and the material barrel.

4. The material feeding device according to claim 3, **characterized in that** the piston comprises a piston body and a pressing block arranged in an axial direction of the material barrel;
the elastic member comprises an elastic body and a clamping portion, the pressure chamber is formed in the elastic body, the clamping portion is disposed on a side of the elastic body facing away from the material barrel, and the clamping portion is disposed and clamped between the piston body and the pressing block.

5. The material feeding device according to claim 4, **characterized in that** the piston body comprises a first recess portion on a side facing the pressing block, the pressing block comprises a second recess portion on a side facing the first recess portion, and the clamping portion is disposed and clamped between the first recess portion and the second recess portion.

6. The material feeding device according to any of claims 3 to 5, **characterized in that** the material feeding device further comprises a pressure measuring element, and the pressure measuring element is communicated with the pressure chamber and adapted to measure a pressure within the pressure chamber.

7. The material feeding device according to any of claims 3 to 6, **characterized in that** the material feeding device further comprises a fluid source and a flow passage, the fluid source is adapted to provide fluid to the pressure chamber, and the flow passage is adapted to communicate the pressure chamber with the fluid source.

8. The material feeding device according to claim 7, wherein the material feeding device further comprises a pressure regulating element, and the pressure regulating element is connected to the flow passage and adapted to regulate the pressure in the pressure chamber.

9. The material feeding device according to any of claims 1 to 8, **characterized in that** the piston comprises a material discharging pipe, the material discharging pipe is communicated with the containing cavity and adapted for the materials in the containing cavity to flow out.

10. The material feeding device according to claim 9, **characterized in that** the material feeding device further comprises a pumping unit, and the pumping unit is communicated with the material discharging pipe and adapted to pump out the materials in the containing cavity through the material discharging pipe.

11. A glue applying system, **characterized by** comprising:
a material feeding device according to any of claims 1 to 10, wherein the material feeding device is adapted to supply fluid glue; and
a metering system communicated with the material feeding device and adapted to measure a volume of the fluid glue to be applied.

12. The glue applying system according to claim 11, **characterized by** further comprising a transfer device, the transfer device comprises a buffer barrel and a vacuumizing device, and the buffer barrel is adapted to communicate the material feeding device with the metering system and adapted for the fluid glue to flow into the metering system through it; and the vacuumizing device is communicated with the buffer barrel and adapted to extract gas in the buffer barrel.
